# EUROPÄISCHE PATENTSCHRIFT

(11) **EP 0 483 147 B1**
(45) Veröffentlichungstag und Bekanntmachung des Hinweises auf die Patenterteilung: **20.01.1993**
(21) Anmeldenummer: 90902142.0
(22) Anmeldetag: 02.02.1990
(51) Int. Cl.: H02N 1/00

(54) **DIELEKTRISCHES MIKROMECHANISCHES ELEMENT**
DIELECTRIC MICROMECHANICAL ELEMENT
ELEMENT MICROMECANIQUE DIELECTRIQUE

(30) Priorität: 02.02.1989 DD 325465
(43) Veröffentlichungstag der Anmeldung: 06.05.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: BENECKE, Wolfgang, D-1000 Berlin 30 (DE); WAGNER, Bernhard, D-1000 Berlin 38 (DE); FUHR, Günter, DDR-1113 Berlin (DD); HAGEDORN, Rolf, DDR-1094 Berlin (DE); GLASER, Roland, DDR-1020 Berlin (DD); GIMSA, Jan, DDR-1058 Berlin (DD)
(74) Vertreter: Münich, Wilhelm, Dr.
(86) Internationale Anmeldenummer: DE9000069
(87) Internationale Veröffentlichungsnummer: WO9009059

(56) Entgegenhaltungen:
- EP-A- 0 233 947
- US-A- 3 924 146
- PATENT ABSTRACTS OF JAPAN vol. 12, No. 395 (E-671) (3242) 20 October 1988 & JP-A-63 136982
- PATENT ABSTRACTS OF JAPAN vol. 12, No. 395 (E-671) (3242) 20 October 1988 & JP-A-63 136979

## Beschreibung

### Anwendungsgebiete der Erfindung

Anwendungsgebiete der Erfindung sind z. B. die Mikroelektronik, in der miniaturisierte mechanische Elemente als Antriebs-, Steuer-, Schalt- und Sensorsysteme Anwendung finden können. Anwendungen kommen auch in der Chemie und Biotechnologie in Frage.

### Charakteristik des bekanntes Standes der Technik

Als dielektrische mikromechanische Elemente sind miniaturisierte Motoren mit dielektrischem Rotor in einem Umgebungsmedium bekannt, die über mehrere Elektroden, in eine Drehbewegung versetzt werden können /GEO 10 (1988) 188, US-Patent 4,740,410. Genutzt werden dazu kontinuierlich oder diskontinuierlich rotierende elektrische Felder /ebenda/. Lineare Bewegungen von Dielektrika in elektrischen Feldern werden unter den Begriffen Elektrophorese, Dielektrophorese bzw. allgemein ponderomtorische Effekte in Lehrbüchern beschrieben Greiner, Theor. Physik Bd. 3, Vgl. H. Deutsch, Thun & Frankfurt a. M., (1982), Pohl, Dielectrophoresis, Cambridge University Press, Cambridge-London-New York-Melbourne, (1978); Landau & Lifschitz, Bd. 1, Akademie-Vlg. Berlin, (1973)/. Der Effekt wird zur Sammlung von Schwebeteilchen in Luftfilteranlagen oder zu Zellsammlung auf biologischem Gebiet genutzt. Entsprechende Anlagen arbeiten mit 2 oder mehr Elektroden und einem elektrischen Gleich- oder Wechselfeld. Eine Nutzung linear forschreitender Feldvektoren in diesem Zusammenhang ist nicht bekannt. Eine Nutzung dielektrischer Miniaturelemente wurde, abgesehen von den dielektrischen Motoren, nicht beschrieben. Linear fortlaufende Magnetfeldvektoren hingegen sind im Zusammenhang mit elektrischen Induktionseffekten und Induktionsfeldmotoren bekannt/u.a. Güldner, Electronica Bd. 238, Militärverlag der DDR, (1987)/.

Durch die Druckschrift EP-A-0 233 947 ist ein linearer Energiekonverter bekannt geworden- Die Anordnung weist eine Vielzahl hintereinander angeordneter Plattenkondensatoren auf, sowie dielektrische Elemente, die bewegbar zwischen den Kondensatorplatten angeordnet sind. Die Kondensatoren werden über Elektroden und Bürsten elektrisch aufgeladen oder entladen. Die bewegbaren Elemente werden entsprechend in die Kondensatoren gezogen oder aus ihnen entfernt und in den nächsten Kondensator gezogen. Dadurch entsteht eine lineare Bewegung der Elemente. Die Bewegung der Elemente erfolgt synchron mit den sukzessiven Auf- und Entladungen der Kondensatoren.

Aus der Druckschrift JP-A-63/136982 ist eine lineare dielektrische Anordnung mit einem in einem Stator geführten Läufer bekannt. Der Stator und der Läufer weisen Elektroden auf. Zur Bewegung des Läufers werden an die Elektroden des Stators nacheinander in Bewegungsrichtung Spannungspulse angelegt, um den Läufer in die Position zwischen die Elektroden zu bringen an welche die Spannung angelegt ist. Die Bewegung des Läufers erfolgt somit synchron mit dem fortschreitenden Spannungspuls.

Bei den beiden beschriebenen Systemen handelt es sich um Synchronläufer, die auf der statischen, kapazitiven Verdrängung von Dielektrika zwischen Elektroden beruht. Das Feld kann jeweils erst dann umgeschaltet werden, wenn der Läufer eine dem Elektrodenabstand vergleichbare Strecke bewegt wurde. Die Anwendungsmöglichkeiten sind dadurch begrenzt.

Der Nachteil dielektrischer Mikromechanikelemente ist die geringe Kraft, bei allerdings auch geringfügigen Strömen. Erst in den letzten Jahren wurde ihre extreme Miniaturisierbarkeit als Vorteil erkannt /GEO 10 (1988), 188/.

### Ziel der Erfindung

Das Ziel der Erfindung ist die kostengünstige Entwicklung eines dielektrischen mikromechanischen Elementes mit universellen Anwendungsmöglichkeiten in der Mikroelektronik.

### Darlegung des Wesens der Erfindung

Die Aufgabe der Erfindung besteht in der Weiterentwicklung eines dielektrischen mikromechanischen Elementes mit linearer Bewegung, so daß es über konstante und variable Bewegungszustände verfügt und universell in der Mikroelektronik eingesetzt werden kann. Die Ansprechzeit soll im Millisekundenbereich und darunter liegen.

Erfindungsgemäß wird die Aufgabe durch die Merkmale des Anspruchs 1 gelöst.

Ein dielektrisch homogen oder inhomogen aufgebauter Läufer, der sich in einem Umgebungsmedium in bekannter Weise gelagert und geführt befindet, mit Hilfe eines oder mehrerer linear fortschreitender elektrischer Felder bewegt wird. Erfindungsgemäß wird über an mindestens zwei Seiten des Läufers, jedoch nicht notwendigerweise in direktem mechanischen Kontakt befindliche Elektroden, ein linear fortschreitender Feldvektor erzeugt. Je nach Kombination der Dielektrika des Läufers, deren Anordnung, der elektrischen Eigenschaften des Umgebungsmediums, sowie der Anordnung und Geometrie der Elektroden, die auch flächenhaft in einer Matrix angeordnet sein können, folgt der Läufer dem elektrischen Feld oder bewegt sich in entgegengesetzte Richtung. Das Bewegungsverhalten des Läufers kann über die Wahl und Anordnung der Dielektrika festgelegt und in weiten Bereichen den Erfordernissen angepaßt werden. Die Bewegung des Läufers kann über die Art der Ansteuerung der Elektroden, die Geschwindigkeit und Amplitude des fortschreitenden Feldes exakt geregelt werden. In Abhängigkeit von der Bewegungsgeschwindigkeit des elektrischen Feldes kann ohne dessen Richtungsänderung eine Änderung der Bewegungsrichtung des Läufers erreicht werden. Aus den gennanten Aufbau- und Ansteuermöglichkeiten ergeben sich eine Vielzahl überraschender Kennlinien, die die Bewegung des Läufers als Funktion der Feldbewegung beschreiben. Die Feldbewegung läßt sich technisch über mehrere phasenverschobene Wechselspannungen oder diskontinuierliche Ansteuerung der Elektroden erreichen. Das gesamte mikromechanische System kann mit den Methoden der Mikroelektronik gefertigt und somit extrem miniaturisiert werden. Die benötigten Spannungen zur Ansteuerung entsprechen in diesem Falle denen in der Mikroelektronik gebräuchlichen, bei Ansprechzeiten in µs-Bereich. Der Läufer kann vollständig oder partiell für elektromagnetische Stahlung durchlässig gestaltet oder mechanisch deformierbar sein.

### Ausführungsbeispiele

### Beispiel 1

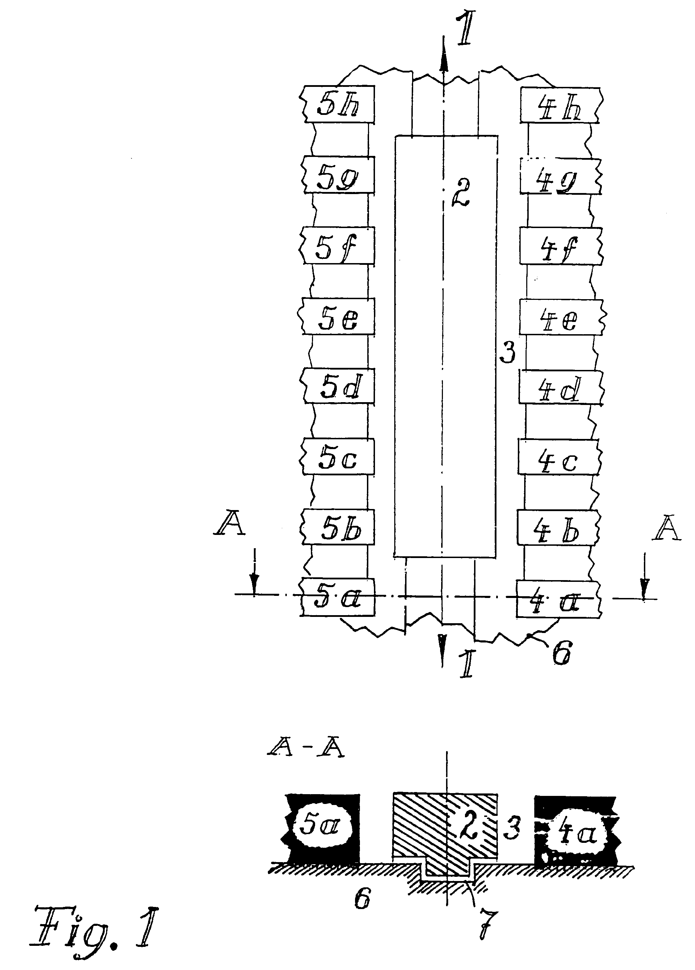

Fig. 1 Dielektrisches mikromechanisches Element dessen elektrische Ansteuerung über 2 Elektrodenreihen erfolgt in Draufsicht und Seitenansicht.

Der Aufbau des dielektrischen mikromechanischen Bauelements ist in Fig. 1 angegeben. Es besteht auf einem dielektrischen Läufer 2 der sich in die Richtungen 1 bewegen kann. Der Läufer 2 befindet sich in einer Führung 7 auf einem Untergrund 6 (z. B. Glas). Angetrieben wird der Läufer über Elektroden 4a-h, 5a-h, die reihenweise auf beiden Seiten angeordnet sind. Zwischen dem Läufer 2 und den Elektroden befindet sich ein Umgebungsmedium 3 (Flüssigkeit oder Gas) . Über den dielektrischen Aufbau des Läufers 2 läßt sich dessen Laufgeschwindigkeit und Richtung verändern. Ein schichtweise in Richtung der Elektroden aufgebauter Läufer kann sich bei gleicher Bewegungsrichtung des Feldvektros in Abhängigkeit von dessen Bewegungsgeschwindigkeit in unterschiedliche Richtung bewegen. Die Elektroden 4, 5 werden paarweise 5a, 4a usw. mit unterschiedlicher Polarität und nacheinander angesteuert. Der Gesamtaufbau läßt sich bis auf wenige Mikrometer miniaturisieren. Die Ansprechzeiten des Läufers liegen dann im Mikrosekunden-Bereich.

### Beispiel 2

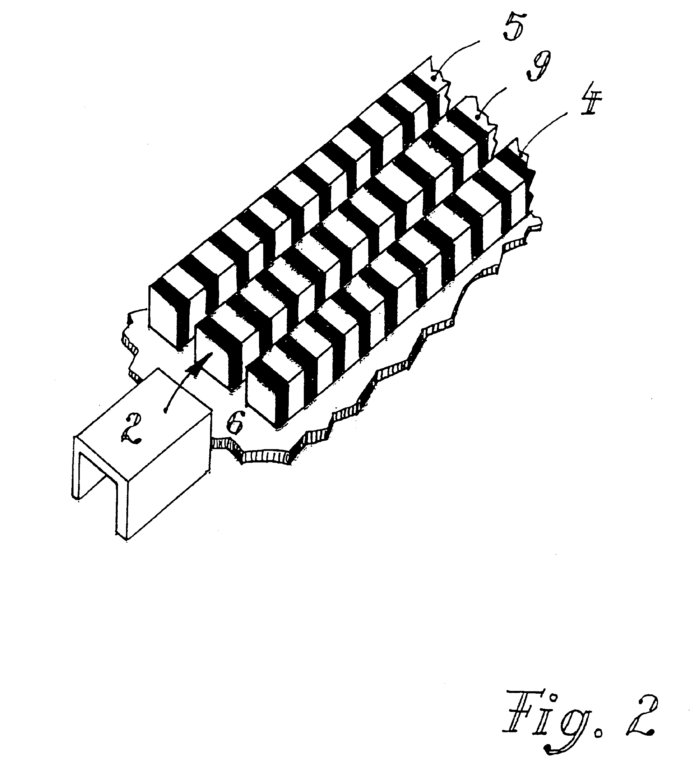

Fig. 2 Dielektrisches mikromechanisches Element mit einem Läufer mit Zentralelektrodenreihe

Das mikromechanische Element ist in seinem Aufbau in Fig. 2 angegeben. Es besteht aus einem dielektrischen Läufer 2 der eine U-Form besitzt. Rechts und links befinden sich Elektrodenreihen 4 und 5. Innerhalb des Läufers im U-förmigen Profil ist eine weitere Elektrodenreihe 9 angeordnet. Der gesamte Aufbau erfolgt auf einem Substrat, wie in Beispiel 1 angegeben. Die elektrische Ansteuerung der Elektroden erfolgt wie in Beispiel 1 mit dem Unterschied, daß jeweils 3 Elektroden mit alternierender Polarität angesteuert werden. Die dargestellte Elektrodenanordnung erhöht die Kraft, die auf den Läufer wirkt.

Die dielektrischen Teile des Läufers werden mit Fertigungsmethoden der Halbleitertechnik und der Mikromechanik hergestellt.

Als Substrat wird beispielweise Silizium evtl. versehen mit dünnen Isolationsschichten wie SiO₂ oder Si₃N₄, oder Glas verwendet.

Die Elektroden werden mit photolithographischen Methoden strukturiert und galvanisch, z. B. mit Gold, abgeformt. Damit kann die Elektrodengeometrie mit Mikrometergenauigkeit definiert werden. Unter Verwendung der Tiefenlithographie können Elektrodenhöhen von mehreren hundert Mikrometer erreicht werden.

Der Läufer wird ebenfalls mit mikromechanischen Verfahren aus dielektrischen Materialien gefertigt, Schichten wie SiO₂, Si₃N₄ oder TiO₂ können bis zu Dicken im Mikrometerbereich hergestellt und strukturiert werden. Dickere Läufer können aus Photolack mit Tiefenlithographie gefertigt werden.

Mit isotropen oder anisotropen und selektiven Ätzverfahren werden im Substrat präzise Gruben und Kanäle geätzt, die zur Fixierung des Läufers oder zum Heran- und Wegleiten der Umgebungslösung des mikromechanischen Elements dienen.

Eine Kapselung des Systems kann mit einem zweiten Wafer, der auf den Substratwafer aufgebondet wird, erreicht werden.

Die Verwendung von Silizium als Substratmaterial bietet die besondere Möglichkeit, elektrische Schaltkreise zur Ansteuerung und Regelung des mikromechanischen Elementes gemeinsam mit den mechanischen Teilen auf einem gemeinsamen Substrat (Wafer) zu integrieren.

## Patentansprüche

1. Dielektrisches mikromechanisches Element, bestehend aus einem in einer Bewegungsrichtung bewegbaren Teil, im folgenden als Läufer (2) bezeichnet, Elektroden (4, 5), die auf zwei oder mehreren Seiten des Läufers angeordnet sind, wobei zumindest auf einer Seite des Läufers mehrere Elektroden eine Reihe entlang der Bewegungsrichtung ausbilden, und einem, den Läufer umbebenden, flüssigkeitsgefüllten oder gasefüllten oder evakuierten Umgebungsraum, im folgenden als Umgebungsmedium bezeichnet,
dadurch **gekennzeichnet**, daß die Elektroden (4), (5) über phasenverschobene alternierende und/oder diskontinuierlich geschaltete Spannungen ansteuerbar sind, und daß das dielektrische Element eine Einrichtung zur Erzeugung eines oder mehrerer sich bezüglich des Läufers stark asynchron bewegender Feldvektoren besitzt.

2. Dielektrisches mikromechanisches Element nach Anspruch 1, dadurch **gekennzeichnet**, daß der oder die wandernden Feldvektoren periodisch oder zeitweise ihre Bewegungsrichtung ändern und/oder voneinander unabhängige Bewegungsrichtungen besitzen.

3. Dielektrisches mikromechanisches Element nach Anspruch 1, dadurch **gekennzeichnet**, daß sich innerhalb des Läufers (2), parallel zu oder auf der Bewegungsachse (1) eine oder mehrere Öffnungen befinden, in der eine oder mehrere Elektroden angeordnet sind, zu der oder denen der Läufer (2) eine Relativbewegung ausführen kann.

4. Dielektrisches mikromechanisches Element nach Anspruch 1, dadurch gekennzeichnet, daß der Läufer (2) aus mehreren auch zueinander beweglich angeordneten gleichartigen oder ungleichen Teilen besteht.

5. Dielektrisches mikromechanisches Element nach Anspruch 1, dadurch gekennzeichnet, daß der Läufer (2) kompartimentweise aus verschiedenen Dielektrika besteht und/oder kontinuierliche und/oder periodische Änderungen seiner dielektrischen Eigenschaften und/oder Geometrie aufweist.

6. Dielektrisches mikromechanisches Element nach Anspruch 1, dadurch gekennzeichnet, daß der Läufer (2) leitfähige Kompartimente und/oder partiell metallische Schichten aufweist.

7. Dielektrisches mikromechanisches Element nach Anspruch 1, dadurch gekennzeichnet, daß Teile oder der gesamte Läufer (2) für optische Strahlung oder andere elektromagnetische Wellen durchlässig sind.

8. Dielektrisches mikromechanisches Element nach Anspruch 1, dadurch gekennzeichnet, daß die Elektrodenreihen (4), (5) durch die der Läufer (2) bewegt wird, länger als dieser, gerade, gekrümmt, verzweigt, geschlossen oder partiell untebrochen sind.

9. Dielektrisches mikromechanisches Element nach Anspruch 1, dadurch gekennzeichnet, daß die Elektroden (4), (5) in einer Matrix angeordnet sind und der Läufer (2) zwischen den Elektroden (4), (5) in einer Ebene bewegt wird.

## Claims

1. Dielectric micromechanical element consisting of a part movable in one direction of movement, hereinafter termed rotor (2), electrodes (4, 5) disposed on two or more sides of said rotor, wherein at least on one side of said rotor several electrodes form a row along the direction of movement, and an ambient space filled with a liquid or a gas or evacuated, hereinafter termed ambient medium, **characterized** in that said electrodes (4), (5) are adapted to be controlled by alternating and/or discontinuously applied voltages out of phase, and that said dielectric element comprises means for generating one or several field vectors moving in a manner strongly non-synchronous relative to said rotor.

2. Dielectric micromechanical element according to Claim 1, **characterized** in that said migrating field vector or vectors periodically or temporarily change their direction of movement and/or have directions of movement independent of each other.

3. Dielectric micromechanical element according to Claim 1, **characterized** in that one or several openings are provided in parallel to or on the axis of movement (1) inside said rotor (2) for the arrangement of one or several electrodes, with said rotor (2) being adapted to carry out a movement relative to said one or several electrodes.

4. Dielectric micromechanical element according to Claim 1, **characterized** in that said rotor (2) consists of a plurality of similar or non-similar components disposed to be movable even relative to each other.

5. Dielectric micromechanical element according to Claim 1, **characterized** in that said rotor (2) consists of different compartmentwise dielectrics and/or presents continuous and/or periodical variations of its dielectric properties and/or its geometry.

6. Dielectric micromechanical element according to Claim 1, **characterized** in that said rotor (2) includes conductive compartments and/or partially metallic layers.

7. Dielectric micromechanical element according to Claim 1, **characterized** in that said rotor (2), either in parts or in its entirety, is transmissive to optical radiation or permeable to other electromagnetic waves.

8. Dielectric micromechanical element according to Claim 1, **characterized** in that said rows of electrodes (4), (5) causing said rotor (2) to move are longer than said rotor, straight, curved, branched, closed or partially discontinuous.

9. Dielectric micromechanical element according to Claim 1 **characterized** in that said electrodes (4), (5) are arranged in a matrix and that said rotor (2) is moved in a plane between said electrodes (4), (5).

## Revendications

1. Élément micromécanique diélectrique composé d'une pièce mobile dans une direction de mouvement, nommé le rotor (2) dans ce qui suit, des électrodes (4, 5) disposées sur deux ou plus côtés dudit rotor, dans lequel, sur au moins un côté dudit rotor, plusieurs électrodes forment une rangée le long de la direction de mouvement, ainsi qu'un volume ambiant rempli d'un liquide ou d'un gaz ou à vide, nommé milieu ambiant dans ce qui suit,
**caractérisé** en ce que lesdites électrodes (4), (5) sont susceptibles d'être agencées par des tensions alternatives et/ou appliquées en discontinu déphasées, et en ce que ledit élément diélectrique comprend des moyens pour générer un ou plusieurs vecteurs de champ à mouvement d'une façon fortement non-synchrone relativement audit rotor.

2. Élément micromécanique diélectrique selon la revendication 1,
**caractérisé** en ce que le ou les vecteurs de champs progressifs changent leur direction de mouvement périodiquement ou temporairement, et/ou présentent des directions de mouvement indépendantes l'une de l'autre.

3. Élément micromécanique diélectrique selon la revendication 1,
**caractérisé** en ce qu'une ou plus ouvertures sont prévues en parallèle à ou sur l'axe de mouvement (1) à l'intérieur dudit rotor (2) pour y arranger une ou plusieurs électrodes, ledit rotor (2) étant susceptible de se déplacer relativement à ladite une ou auxdites plusieurs électrodes.

4. Élément micromécanique diélectrique selon la revendication 1,
**caractérisé** en ce que ledit rotor (2) est composé d'une pluralité d'éléments similaires ou différents, qui sont disposés pour un mouvement même relatif l'un à l'autre.

5. Élément micromécanique diélectrique selon la revendication 1,
**caractérisé** en ce que ledit rotor (2) est composé de diélectriques différents en compartiments, et/ou présente des variations en continu et/ou périodiques dans ses caractéristiques diélectriques et/ou sa géométrie.

6. Élément micromécanique diélectrique selon la revendication 1,
**caractérisé** en ce que ledit rotor (2) comprend des compartiments conducteurs et/ou des couches métalliques en partie.

7. Élément micromécanique diélectrique selon la revendication 1,
**caractérisé** en ce que ledit rotor (2), soit en partie ou dans sa totalité, est transparent au rayonnement optique ou perméable à des autres ondes électromagnétiques.

8. Élément micromécanique diélectrique selon la revendication 1,
**caractérisé** en ce que lesdites rangées d'électrodes (4), (5), qui cause ledit rotor (2) à se déplacer, sont plus longues que ledit rotor, et en forme rectiligne, incurvées, fourchues, fermées ou interrompues en parties.

9. Élément micromécanique diélectrique selon la revendication 1
**caractérisé** en ce que lesdites électrodes (4), (5) sont disposées dans une matrice, et en ce que ledit rotor (2) est déplacé dans un plan entre lesdites électrodes (4), (5).
